**Europäisches Patentamt**

**European Patent Office**

**Office européen des brevets**

(19)

(11) Numéro de publication: **0 167 465**

**B1**

(12)

# FASCICULE DE BREVET EUROPÉEN

(45) Date de publication du fascicule du brevet:
06.04.88

(21) Numéro de dépôt: **85420117.5**

(22) Date de dépôt: **24.06.85**

(51) Int. Cl.⁴: **C 04 B 7/44**

<div style="border:1px solid black; display:inline-block; padding:4px">E R R A T U M</div>

(SEITE, SPALTE, ZEILE)
(PAGE, COLUMN, LINE)
(PAGE, COLONNE, LIGNE)

DIE TEXTSTELLE :
TEXT PUBLISHED :
LE PASSAGE SUIVANT :

LAUTET BERICHTIGT:
SHOULD READ :
DEVRAIT ETRE LU :

| DIE TEXTSTELLE / TEXT PUBLISHED / LE PASSAGE SUIVANT | | | LAUTET BERICHTIGT / SHOULD READ / DEVRAIT ETRE LU |
|---|---|---|---|
| contenant 60 % d'un produit ... | 3 | 38 | contenant 80 % d'un produit ... |

| | | | |
|---|---|---|---|
| Tag der Entscheidung über die Berichtigung ) Date of decision on ) rectification: ) Date de décision portant ) sur modification: ) | 30.05.88 | Ausgabe- und Ver- öffentlichungstag: ) Issue and publication ) date: ) Date d'edition et de ) publication: ) | 20.07.88 |

Patbl. Nr.)

EPB no:) 88/29

Bull. no:)

**Europäisches Patentamt**

**European Patent Office**

**Office européen des brevets**

(19)

(11) Numéro de publication: **0 167 465**
**B1**

(12) # FASCICULE DE BREVET EUROPÉEN

(45) Date de publication du fascicule du brevet:
06.04.88

(51) Int. Cl.⁴: **C 04 B 7/44**

(21) Numéro de dépôt: **85420117.5**

(22) Date de dépôt: **24.06.85**

(54) **Perfectionnements à la fabrication des liants hydrauliques.**

(30) Priorité: **25.06.84 FR 8410186**

(43) Date de publication de la demande:
**08.01.86 Bulletin 86/2**

(45) Mention de la délivrance du brevet:
**06.04.88 Bulletin 88/14**

(84) Etats contractants désignés:
**AT BE CH DE FR GB IT LI LU NL SE**

(56) Documents cité:
**DE-C-151 809**
**DE-C-399 446**
**FR-A-534 510**
**FR-A-1 387 704**
**FR-A-2 318 834**

**Le dossier contient des informations techniques présentées postérieurement au dépôt de la demande et ne figurant pas dans le présent fascicule.**

(73) Titulaire: **Société dite : CIMENTS DE CHAMPAGNOLE (société anonyme), F-39300 Champagnole (FR)**

(72) Inventeur: **Meynardi, Guy, 103, rue du Boichot, F-39100 Dole (FR)**

(74) Mandataire: **Karmin, Roger, Cabinet MONNIER 150, cours Lafayette, F-69003 Lyon (FR)**

EP 0 167 465 B1

**0 167 465**

## Description

La présente invention est relative à un procédé perfectiononné de fabrication de liants hydrauliques et aux produits obtenus par sa mise en oeuvre.

De manière à simplifier la lecture des présentes, on trouvera ci-dessous quelques définitions de mots utilisés:

cru: mélange de calcaire (carbonate de calcium) et d'argile (oxyde de silice, d'aluminium et de fer) en proportions bien définies, broyé, séché et homogénéisé en vue de la fabrication du clinker de ciment portland artificiel;

clinker: c'est du cru après traitement thermique dans un four de cimenterie à 1450° et qui contient principalement des aluminates de chaux, des aluminoferrites et des silicates de chaux. Le clinker est un produit hydraulique qui finement broyé avec quelques pour-cent de gypse, donne le ciment portland artificiel normalisé.

gypsage: opération qui consiste à rajouter quelques pour-cent de gypse ($CaSO_2 \cdot 2H_2O$) au moment du broyage du clinker pour régulariser la prise du ciment.

pouzzolane: produit argileux qui a subit une déhydroxylation par traitement thermique, ce qui lui confère la propriété de s'allier à la chaux pour la prise du ciment portland artificiel.

On rappellera qu'avant les années 1960, le mélange des constituants de cru avait lieu en pâte aqueuse (renfermant 30 à 35 % d'eau). Celle-ci devait être évaporée avant cuisson du cru, de telle sorte que la consommation énergétique nécessaire à l'élaboration du clinker était alors de l'ordre de 6284 MJ (1500 thermies) pour l'élaboration d'une tonne de ce dernier.

Par la suite, on a amélioré le procédé de fabrication, de telle sorte que depuis les années 1960 la possibilité de réaliser un excellent mélange de poudres sèches a permis d'améliorer nettement le bilan thermique en favorisant la clinkérisation par voie sèche. Ensuite, les améliorations des conditions d'échange de chaleur dans les fours de cimenterie ont encore permis d'abaisser la consommation énergétique à environ 3351 MJ (600 thermies) par tonne de clinker.

Cette consommation calorifique constitue sensiblement le plafond pratique de la fabrication classique du clinker, c'est-à-dire que jusqu'à présent il n'a pas été possible de la diminuer.

On peut donc affirmer que la fabrication du ciment représente une consommation d'énergie très importante. Par exemple, en France, l'industrie cimentière arrive en deuxième rang des consommateurs.

On comprend donc aisément que ce soit un souci permanent des cimentiers d'essayer de réaliser des économies d'énergie en vue de diminuer le prix de revient de leurs fabrications.

Il faut ajouter que malgré l'utilisation de la technique par voie sèche, l'industrie cimentière est polluante du fait de la haute température à laquelle fonctionnent les fours. Dans ces conditions, il est nécessaire de prévoir d'importantes installations pour la protection de l'environnement, ce qui est un élément supplémentaire d'élévation du prix de revient des liants hydrauliques actuellement fabriqués.

Les perfectionnements qui font l'objet de la présente invention visent à remédier aux inconvénients précités et à permettre la réalisation d'un nouveau mode de fabrication des liants hydrauliques en opérant à plus basse température, ce qui permet d'une part d'éviter les émissions polluantes du fait qu'il s'effectue aux environs de 900°C, et d'autre part de réaliser d'importantes économies d'énergie.

En outre, le procédé suivant l'invention permet d'obtenir un liant hydraulique de meilleure qualité que celui obtenu par les méthodes usuelles.

Le procédé de fabrication suivant l'invention consiste:

I - à préparer d'abord un produit actif par une méthode comportant les phases suivantes:

- prendre une matière première renfermant des phases argileuses et du carbonate de calcium en mélange intime,
- traiter thermiquement cette matière à une température comprise entre 700 et 900°C,
- maintenir pendant ce traitement une pression partielle d'anhydride carbonique s'opposant à la dissociation thermique du carbonate de calcium,
- réaliser simultanément l'activation des phases argileuses par déhydroxylation (activation pouzzolanique) et des combinaisons calciques à propriétés hydrauliques potentielles, sans formation de chaux libres;

II - et à mélanger ensuite jusqu'à 95 % du produit actif obtenu, avec le complément à 100 % correspondant d'un produit activant.

Dans la fabrication chimique des liants hydrauliques tels que les ciments, on réalise la décomposition thermique complète du carbonate de calcium présent dans le cru afin que l'oxyde de calcium libéré puisse réagir à température élevée (1200 à 1450°C) avec les oxydes de fer, d'aluminium et de silicium pour former les phases hydrauliques du clinker.

Conformément à l'invention, on évite la décarbonatation complète du carbonate de calcium en la limitant à la seule formation de combinaisons calciques actives.

On sait que la dissociation thermique du carbonate de calcium est une réaction d'équilibre dont la température dépend de la pression partielle du gaz carbonique régnant dans l'enceinte réactionnelle. Pour une pression d'une atmosphère ($1,013 \cdot 10^5$ Pa) cette température est de l'ordre de 920°C. On a donc suivant l'invention rendu possible le fait de chauffer sans décomposition du carbonate de calcium entre 700 et 900°, grâce au maintien d'une pression convenable de gaz carbonique.

Si dans cet état le carbonate de calcium se trouve en présence d'oxyde de fer, d'aluminium et de silicium

2

# 0 167 465

suffisamment réactifs (par exemple ceux provenant de l'activation thermique des argiles), à une température telle que des réactions de formation de combinaisons calciques simples ou complexes deviennent thermodynamiquement possibles, seul le carbonate de calcium entrant en combinaison se décompose.

D'autre part, la zone de température indiquée (700 à 900° C) correspond à celle de la déhydroxylation plus ou moins complète d'un grand nombre d'hydrates et d'argiles avec formation d'oxydes très réactifs. Cette déhydroxylation contrôlée est, on le sait, à la base de l'élaboration des pouzzolanes artificielles. En résumé, suivant la présente invention, on réalise simultanément des réactions d'activation des phases hydratées et des réactions de formation de combinaisons calciques, à partir d'une matière initiale convenable traitée à une température liée à la pression partielle de gaz carbonique s'opposant à la dissociation du carbonate de calcium n'ayant pas réagi.

Les composés formés dans les conditions décrites (oxydes actifs et combinaisons calciques) sont caractérisés par une structure très mal organisée à laquelle ils doivent d'ailleurs leur réactivité. D'autre part, les composés calciques n'étant jamais en présence d'un excès d'oxyde de calcium au cours de leur formation, sont le plus souvent à un taux de saturation en chaux minimum. Ceci a pour conséquence que le produit actif considéré ne peut développer complétement ses qualités hydrauliques qu'en présence d'un générateur d'hydroxyde de calcium tel que le clinker ou tout autre produit activant susceptible d'avoir une action physico-chimique comparable (une quantité de l'ordre de 5 % d'un tel produit permet déjà une action notable). De même, l'établissement du gypsage optimum pour chaque mélange assure les meilleurs résultats.

Le fait d'opérer à température relativement basse et en évitant la dissociation du carbonate de calcium n'ayant pas réagi, permet d'obtenir un bilan thermique avantageux car la dissociation thermique du carbonate de calcium représente la majeure partie de la consommation d'énergie. De même, la pollution de l'atmosphère est largement diminuée. En fait, la fabrication d'une tonne de produit actif nécessite seulement environ 1675 MJ (400 thermies).

Le traitement thermique précité est avantageusement réalisé dans un four à flamme avec un combustible et un réglage assurant la teneur maximale possible en gaz carbonique.

On peut aussi utiliser un four à lit fluidisé réalisé en atmosphère convenable.

Le contrôle chimique du traitement thermique du produit est facilement réalisé par les déterminations de la perte au feu, de la teneur en gaz carbonique, de la teneur en chaux libre et de la teneur en résidu insoluble, réalisées selon les méthodes normalisées.

Le choix de la matière à traiter est guidé par les considérations suivantes:

Le produit à traiter doit présenter un contact aussi intime que possible entre les phases hydratées et le carbonate de calcium. Il peut être d'origine naturelle (argiles plus ou moins calcaires, marnes, certains schistes...), soit d'origine artificielle (mélange de matériaux finement divisés (résidu de coprécipitation, traitement des eaux).

Eventuellement, des agents minéralisateurs chimiques peuvent être ajoutés pour favoriser les réactions.

Les réactions s'effectuant à l'état solide, il faut éviter une dilution mutuelle des composants principaux l'un par l'autre (phases hydratées et phases carbonatées).

A titre d'exemple, un liant hydraulique contenant 60 % d'un produit obtenu suivant l'invention et 20 % de clinker classique avec un gypsage optimum a donné les résistances suivantes en mortier Iso:

|  | Résistance traction-flexion | Compression |
|---|---|---|
| 2 jours | 2,55 MPa | 11 MPa |
| 7 jours | 5,60 " | 31 " |
| 28 jours | 7,80 " | 48 " |
| 3 mois | 8,40 " | 53,60 |
| 6 mois | 8,70 " | 55,60 |

On a ainsi réalisé un liant hydraulique de très bonne qualité dont la mise en oeuvre permet une économie substantielle d'énergie et une diminution sensible de la pollution.

**Revendications**

1. Procédé de fabrication d'un liant hydraulique, caractérisé en ce qu'il consiste:

I - à préparer un produit actif par une méthode comportant les phases suivantes:

- prendre une matière première renfermant des phases argileuses et du carbonate de calcium en mélange intime,

- traiter thermiquement cette matière à une température comprise entre 700 et 900° C,

- maintenir pendant ce traitement une pression partielle d'anhydride carbonique s'opposant à la dissociation thermique du carbonate de calcium,

- réaliser simultanément l'activation des phases argileuses par déhydroxylation (activation pouzzolanique) et des combinaisons calciques à propriétés hydrauliques potentielles, sans formation de chaux libre,

II - et à mélanger jusqu'à 95 % du produit actif obtenu avec le complément à 100 % correspondant d'un

3

produit activant.

2. Procédé suivant la revendication 1, caractérisé en ce que le produit activant génère de l'hydroxyde de calcium.

3. Procédé suivant la revendication 1, caractérisé en ce que le produit activant est du clinker classique.

4. Liant hydraulique, caractérisé en ce qu'il est obtenu par mise en oeuvre du procédé suivant les revendications 1 à 3.

## Patentansprüche

1. Verfahren zur Herstellung von hydraulischen Bindemitteln, dadurch gekennzeichnet, dass es darin besteht:
I zuerst ein aktives Produkt durch eine die folgenden Schritte umfassenden Methode vorzubereiten:
- Verwenden eines Grundmaterials, das Tonphasen und Kalziumkarbonatphasen in inniger Mischung einschliesst,
- dieses Material einer Warmebehandlung bei einer Temperatur zwischen 700 und 900° C unterziehen,
- Aufrechterhalten eines Partialdrucks des Kohlensäureanhydrids während dieser Behandlung, der sich der thermischen Zersetzung des Kalziumkarbonats entgegenstellt,
- gleichzeitige Aktivierung der Tonphasen durch Dehydroxylierung (Puzzolanerde-Aaktivierung) und der kalziumhaltigen Verbindungen mit potentiellen hydraulischen Eigenschaften, ohne die Bildung von freiem Kalk;
II und anschliessend bis zu 95 % des erhaltenen aktiven Produktes zu 100 % mit einem Aktivierungsmittel zu mischen.

2. Verfahren nach Anspruch 1, dadurch gekennzeichnet, dass das Aktivierungsmittel Kalziumhydroxid erzeugt.

3. Verfahren nach Anspruch 1, dadurch gekennzeichnet, dass das Aktivierungsmittel klassischer Zementklinker ist.

4. Hydraulisches Bindemittel, dadurch gekennzeichnet, dass es durch die Durchfuhrung des Verfahrens nach den Ansprüchen 1 bis 3 erhalten wird.

## Claims

1. A process for the manufacture of a hydraulic binding agent characterized in that it consists in:
I Preparing an active product (alpha) by a method comprising the following stages:
- taking a raw material containing argillaceous phases and calcium carbonate intimately mixed,
- thermally treating this material at a temperature between 700 and 900°C,
- maintaining during this treatment a partial pressure of carbon dioxide against the thermal dissociation of calcium carbonate,
- simultaneously realizing the activation of the argillaceous phases by dehydroxylation (pozzolanic activation) and of the calcic combinations having potential hydraulic properties without formation of free limes.
II and in subsequently mixing up to 95 % of the active product obtained with complementary materials to 100 % to give an activating product.

2. Process according to claim 1, characterized in that the activating product generates calcium hydroxide.

3. Process according to claim 1, characterized in that the activating product is classic clinker.

4. Hydraulic binding agent, characterized in that it is obtained by means of the process according to claims 1 to 3.